# EUROPÄISCHE PATENTSCHRIFT

(11) **EP 1 237 692 B1**
(45) Veröffentlichungstag und Bekanntmachung des Hinweises auf die Patenterteilung: **02.06.2004**
(21) Anmeldenummer: 00969531.3
(22) Anmeldetag: 23.10.2000
(51) Int. Cl.: B29B 9/06, C08J 3/12, G11B 7/24, G02B 1/04, C08G 64/40

(54) **VERFAHREN ZUR HERSTELLUNG HOCHREINER POLYMERGRANULATE**
METHOD FOR THE PRODUCTION OF HIGH-PURITY POLYMER GRANULES
PROCEDE DE PRODUCTION DE GRANULES POLYMERES DE GRANDE PURETE

(30) Priorität: 03.11.1999 DE 19952852
(43) Veröffentlichungstag der Anmeldung: 11.09.2002
(73) Patentinhaber: Bayer MaterialScience AG, 51368 Leverkusen (DE); BAYER ANTWERPEN N.V., 2040 Antwerpen (BE)
(72) Erfinder: ELSNER, Thomas, 40593 Düsseldorf (DE); HEUSER, Jürgen, 47803 Krefeld (DE); KORDS, Christian, 47829 Krefeld (DE); KÜHLING, Steffen, B-9100 Sint-Niklaas (BE); VIROUX, Paul, B-2540 Hove (BE)
(86) Internationale Anmeldenummer: PCT/EP2000/010401
(87) Internationale Veröffentlichungsnummer: WO 2001/032381

(56) Entgegenhaltungen:
- EP-A- 0 293 769
- EP-A- 0 615 996
- WO-A-00/09582
- US-A- 5 969 084
- DATABASE WPI Section Ch, Week 198544 Derwent Publications Ltd., London, GB; Class A23, AN 1985-273100 XP002158797 & JP 60 184814 A (MITSUBISHI GAS CHEM CO INC), 20. September 1985 (1985-09-20)
- DATABASE WPI Section Ch, Week 199250 Derwent Publications Ltd., London, GB; Class A23, AN 1992-410420 XP002158798 & JP 04 306227 A (TEIJIN CHEM LTD), 29. Oktober 1992 (1992-10-29)
- DATABASE WPI Section Ch, Week 199631 Derwent Publications Ltd., London, GB; Class A23, AN 1996-305054 XP002158799 & JP 08 132437 A (MITSUBISHI GAS CHEM CO INC), 28. Mai 1996 (1996-05-28)

## Beschreibung

Die Erfindung betrifft ein Verfahren zur Herstellung von Polymergranulat, insbesondere Polycarbonatgranulat, aus Polymerschmelzen, insbesondere Polycarbonatschmelzen durch Schmelzeextrusion des Polymeren, Abkühlen der Schmelze in einer Kühlflüssigkeit und Granulieren des verfestigten Polymeren

Ein solches Verfahren ist z.B. aus der EP-A-0 615 996 bekannt.

Polycarbonate mit hoher Reinheit werden für optische Formkörper, z.B. für optische und magnetooptische Speichermedien, insbesondere in Laserstrahlung lesbaren oder beschreibbaren Datenspeichermedien, eingesetzt. Da die Speicherkapazität dieser Medien immer weiter erhöht werden soll, steigen auch die Anforderungen an die Reinheit der eingesetzten Polycarbonate.

Darüber hinaus wird solch hochreines Polycarbonat bei Verscheibungen für Kraftfahrzeuge und Streuscheiben für Automobil-Reflektoren eingesetzt, bei denen eine hohe Lichttransmission ohne Störstellen im Formteil von enormer Wichtigkeit sind. Verscheibungen anderer Art wie für Gewächshäuser, sogenannte Stegdoppelplatten oder Hohlkammerplatten oder Massivplatten eingesetzt. Hergestellt werden diese Formkörper durch Spritzgussverfahren, Extrusionsverfahren und Extrusions-Blasformverfahren unter Verwendung eines Polycarbonats mit dem geeigneten Molekulargewicht.

Zur Herstellung von Polycarbonaten nach dem sogenannten Phasengrenzflächenverfahren werden Dihydroxydiarylalkane in Form ihrer Alkalisalze mit Phosgen in heterogener Phase in Gegenwart von anorganischen Basen wie Natronlauge und einem organischen Lösungsmittel, in dem das Produkt Polycarbonat gut löslich ist, umgesetzt. Während der Reaktion ist die wässrige Phase in der organischen Phase verteilt und nach der Reaktion wird die organische, Polycarbonat enthaltende Phase mit einer wässrigen Flüssigkeit gewaschen, wobei unter anderem Elektrolyte entfernt werden sollen, und die Waschflüssigkeit anschließend abgetrennt. Anschließend wird das Polycarbonat vom organischen Lösungsmittel befreit. In der letzten Stufe wird das Polycarbonat in eine gut weiterzuverarbeitende Form z. B. Granulatform überführt.

Eine andere Herstellungsmöglichkeit zu Polycarbonaten stellt das Schmelzeumesterungsverfahren oder Varianten hiervon (Dreistufenverfahren Schmelzeoligocarbonatherstellung, Kristallisation, Festphasenpolykondensation) dar. Auch hierbei wird das Polycarbonat nach der Reaktion/Herstellung in eine gut weiterzuverarbeitende Form z. B. Granulatform überführt.

Verfährt man nach den üblichen Aufarbeitungs-/Granulierungsverfahren, so stellt man fest, dass die Qualität der Polycarbonate, insbesondere bzgl. der Verunreinigungen, Störstellen im Polycarbonat für gewisse Anwendungen der Polycarbonate nicht ausreicht.

Der Erfindung liegt die Aufgabe zugrunde, Polycarbonate und Copolycarbonate mit einer noch größeren Reinheit in bezug auf Störstellenfreiheit bereitzustellen, die zur Herstellung von Formkörpern, insbesondere optischer Formkörper, magnetooptischer und optischer Datenspeicher mit besonders hoher Datendichte oder besonders geringer Fehlerhäufigkeit geeignet sind und die Nachteile der bekannten Verfahren vermeidet.

Die Anzahl an Störstellen im Polycarbonat kann durch einen Laser-Folien-Scan-Test bestimmt werden.

Es wurde nun gefunden, dass man die notwendige Qualität der Polycarbonate in einem Verfahren der oben genannten Art erreichen kann, wenn man die Aufarbeitung/Granulierung des Polycarbonats unter bestimmten, speziellen Bedingungen, gemäß dem Kennzeichenteil des Anspruches 1 durchführt.

Gegenstand der Erfindung ist ein Verfahren zur Herstellung von Polymergranulat, insbesondere Polycarbonatgranulat, aus Polymerschmelzen, insbesondere Polycarbonatschmelzen, durch Schmelzeextrusion des Polymeren, Abkühlen der Schmelze in einer Kühlflüssigkeit und Granulieren des verfestigten Polymeren, dadurch gekennzeichnet, dass die mit dem Polymeren in Kontakt tretende Kühlluft bzw. Umgebungsluft einen Anteil an Feststoffpartikeln von maximal 10 ppm, bevorzugt 5 ppm, besonders bevorzugt 0,5 ppm aufweist.

Das bevorzugte Verfahren ist dadurch gekennzeichnet, dass die Schmelzeextrusion, das Abkühlen der Schmelze und Granulieren des Polymeren in einem gekapselten Raum durchgeführt wird.

Besonders bevorzugt wird die Granulierung in einem Raum durchgeführt, wobei die mit dem Polymermaterial in Kontakt tretende Umgebungsluft stufenweise filtriert wird und zwar dergestalt, dass die Luft bevorzugt zunächst über Vorfilter der Filterklasse EU 5 bis EU 7, danach über Feinfilter der Filterklasse EU 7 bis EU 9 und schließlich über Endfilter der Filterklasse EU 13 bis EU 14 gefiltert wird (wobei die Filterklassen nach DIN 24183 bzw. EUROVENT 4/5, 4/4 im Stand August 1999 bestimmt sind).

Diese Polymergranulate und die hieraus hergestellten Formkörper zeigen sehr gute Ergebnisse bei der Prüfung im Laser-Folien-Scan-Test. So zeigen die erfindungsgemäß produzierten Polycarbonate weniger als 250, insbesondere weniger als 150 Störstellen pro m² Extrusionsfolie auf.

Die erfindungsgemäß einzusetzenden Polymere sind beispielsweise Polycarbonate, sowohl Homopolycarbonate als Copolycarbonate und deren Gemische. Die Polycarbonate können aromatische Polyestercarbonate sein oder Polycarbonate, die im Gemisch mit aromatischen Polyestercarbonaten vorliegen. Der Begriff Polycarbonat wird anschließend stellvertretend für die zuvor genannten Polymere verwendet.

Das bevorzugt einzusetzende Polycarbonat wird insbesondere nach dem sogenannten Phasengrenzflächenverfahren oder dem Schmelzeumesterungsverfahren erhalten (H. Schnell "Chemistry and Physics of Polycarbonates", Polymerreview, Vol.IX S.33ff, Interscience Publishers, New York 1964).

Eine der bevorzugten Ausführungsformen des genannten Herstellungsverfahrens ist eine Variante, bei der die Einsatzstoffe nach dem Phasengrenzflächenverfahren weiterverarbeitet werden,
wobei die Polycarbonat enthaltende Reaktionslösung gegebenenfalls direkt nach der Reaktion filtriert,
die wässrige Phase abgetrennt, die erhaltene Polycarbonatlösung gegebenenfalls nochmals filtriert,
gewaschen wird,
die Waschflüssigkeit abgetrennt und das Lösungsmittel abgedampft wird,
und man das nach dem Abtrennen der Waschflüssigkeit erhaltene Gemisch aus organischer Polycarbonat-Lösung und restlicher Waschflüssigkeit gegebenenfalls bis zum Erreichen einer klaren Lösung erwärmt,
bevor man zum Abtrennen von Feststoffen nochmals mindestens einmal, bevorzugt zweimal, besonders bevorzugt mindestens dreimal, ganz besonders bevorzugt stufenweise filtriert,
das Lösungsmittel vom Polycarbonat abtrennt,
und das Polycarbonat unter den Bedingungen des erfindungsgemäßen Verfahrens aufarbeitet und granuliert.

In einer bevorzugten Ausführungsform ist neben der Filtration der Kühlluft bzw. Umgebungsluft zusätzlich vorgesehen, dass jede mit dem Polymer in Kontakt tretende Kühlflüssigkeit einen Anteil von Fremdpartikeln von höchstens 2 Mio. Teilchen pro 1 Wasser (Teilchengröße >0,5 µm), besonders bevorzugt höchstens 1 Mio. Teilchen pro 1 Wasser (Teilchengröße >0,5 µm), ganz besonders bevorzugt höchstens 0,5 Mio. Teilchen pro 1 Wasser (Teilchengröße >0,5 µm) hat.

Dies kann durch Filtration der Kühlflüssigkeit erreicht werden.

Die Filtration der sonstigen Einsatzstoffe, Additive und des Kühlflüssigkeitsmediums erfolgt günstigerweise in der Regel durch den Einsatz von Membranfilter. Die Porengröße der Filtermaterialien beträgt in der Regel 0,01 bis 5 µm vorzugsweise 0,02 bis 1,5 µm, bevorzugt 0,05 µm bis 0,6 µm. Solche Filtermaterialien sind im Handel beispielsweise von den Firmen Pall GmbH, D-63363 Dreieich, und Krebsöge GmbH, D-42477 Radevormwald, (Typ SIKA-R CUIAS) erhältlich.

In einer bevorzugten Variante wird stufenweise mit mehreren Filtern filtriert. Dabei beginnt man günstig mit gröberen Filtern, um dann zu feineren Filtern zu wechseln.

Ein anderes bevorzugtes Herstellverfahren für Polycarbonat stellt das Schmelzepolycarbonatverfahren dar, bei dem, ausgehend von aromatischen Diphenolen, Kohlensäurediarylestem, Katalysatoren und gegebenenfalls Verzweigern bei einer Temperatur von 80°C bis 340°C und einem Druck von 1000 mbar (hPa) bis 0,01 mbar (hPa) Polycarbonat hergestellt wird.

Als Einsatzstoffe bevorzugt einzusetzende Verbindungen sind Bisphenole der allgemeinen Formel HO-Z-OH, worin Z ein divalcnter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)diisopropylbenzole gehören.

Besonders bevorzugte Bisphenole, die zu den vorgenannten Verbindungsgruppen gehören, sind 2,2-Bis-(4-hydroxyphenyl)-propan (BPA/Bisphenol-A), Tetraalkylbisphenol-A, 4,4-(meta-Phenylendiisopropyl)diphenol (Bisphenol M), 1,1-Bis-(4-hydroxyphenyl)-3,3,5-trimethylcyclohexanon sowie gegebenenfalls deren Gemische. Besonders bevorzugte Copolycarbonate sind solche auf der Basis der Monomere Bisphenol-A und 1,1-Bis-(4-hydroxyphenyl)-3,3,5-trimethylcyclohexan.

Geeignete Kohlensäurediester im Sinne der Erfindung sind Di-C₆- bis C₁₄-Arylester, vorzugsweise die Diester von Phenol oder alkylsubstituierten Phenolen, also Diphenylcarbonat oder z.B. Dikresylcarbonat. Bezogen auf 1 Mol Bisphenpol werden die Kohlensäurediester in 1,01 bis 1,30 Mol, bevorzugt in 1,02 bis 1,15 Mol eingesetzt.

Es ist darauf zu achten, dass die Einsatzstoffe, also die Diphenole und die Kohlensäurediarylester frei von Alkali- und Erdalkaliionen sind, wobei Mengen von kleiner 0,1 ppm an Alkali- und Erdalkaliionen toleriert werden können. Derart reine Diphenole bzw. Kohlensäurediarylester sind erhältlich, indem man die Kohlensäurediarylester bzw. Diphenole umkristallisiert, wäscht oder destilliert. Beim erfindungsgemäßen Verfahren soll der Gehalt an Alkali- und Erdalkalimetallionen sowohl im Diphenol als auch im Kohlensäurediester einen Wert von < 0,1 ppm betragen. Der Gesamtgehalt an Chlor der Rohstoffe sollte einen Wert von 2 ppm nicht übersteigen und der Gehalt an verseifbarem Chlor des Kohlensäurediesters einen Wert von 0,05 ppm nicht übersteigen. Für die Farbe des resultierenden Polycarbonats ist es von Vorteil, wenn die Rohstoffe, also die Diphenole und die Kohlensäurediarylester, im Falle einer destillativen Reinigung der Rohstoffe im letzten Schritt der Herstellung, die feste Phase nicht durchlaufen haben, also eine Schmelze- bzw. Mischschmelze der Rohstoffe in die Umesterungsreaktion eingesetzt wird oder zumindest einer der Rohstoffe flüssig dosiert wird.

Die in Frage kommenden Polycarbonate können durch den Einsatz geringer Mengen Verzweiger bewußt und kontrolliert verzweigt werden. Einige geeignete Verzweiger sind:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-(4',4"-dihydroxytriphenyl)-methyl)-benzol und insbesondere
α,α',α"-Tris-(4-hydroxyphenyl)-1,3,5-triisopropylbenzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern, können mit den Diphenolen zusammen eingesetzt werden.

Bevorzugte Katalysatoren sind Verbindungen der allgemeinen Formel 2 und 3: 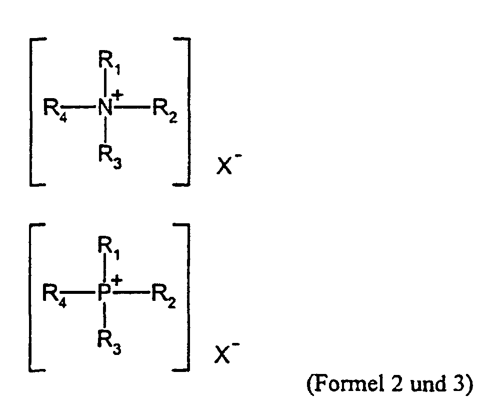 wobei R₁₋₄ dieselben oder verschiedene Alkyle, Aryle oder Cycloalkyle sein können und X⁻ ein Anion sein kann, bei dem das korrespondierende Säure-Base-Paar H⁺+X⁻ <=> HX einen pK_{B} von <11 besitzt sowie Alkali-/Erdalkalimetallkatalysatoren.

Geeignete Katalysatoren für das genannte Verfahren sind beispielsweise:
Tetramethylammoniumhydroxid, Tetramethylammoniumacetat, Tetramethylammoniumfluorid, Tetramethylammoniumtetraphenylboranat, Tetraphenylphosphoniumfluorid, Tetraphenyl-phosphoniumtetraphenylboranat, Dimethyldiphenylammoniumhydoxid, Tetraethylammonium- hydroxid, DBU, DBN oder Guanidinsysteme wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexyliden-di-1,5,7-triazabicyclo-[4,4,0]-dec-5-en, 7,7'-Decyliden-di-1,5,7-triazabicyclo-[4,4,0]-dec-5-en, 7,7'-Dodecyliden-di-1,5,7-triazabicyclo-[4,4,0]-dec-5-en oder Phosphazene wie beispielsweise das Phosphazen-Base P₁-t-Oct = tert.-Octyl-imino-tris-(dimethylamino)-phosphoran, Phosphazen-Base P₁-t-Butyl = tert.-Butyl-imino-tris-(dimethylamino)-phosphoran, BEMP = 2-tert.-Butylimino-2-diethylamino-1,3-dimethyl-perhydro-1,3-diaza-2-phosphorin sowie Lithium-, Natrium-, Kalium-, Cäsium-, Calzium-, Barium-, Magnesium-, -hydroxide, - carbonate, -halogenide, -phenolate, -diphenolate, -fluoride, -acetate, -phosphate, - hydrogenphosphate, -boranate.

Diese Katalysatoren werden in Mengen von 10⁻² bis 10⁻⁸ Mol, bezogen auf 1 Mol Diphenol, eingesetzt. Die Katalysatoren können auch in Kombination (zwei oder mehrere) miteinander eingesetzt werden.

Die Reaktion der aromatischen Dihydroxyverbindung und des Kohlensäurediesters kann kontinuierlich oder diskontinuierlich beispielsweise in Rührkesseln, Dünnschichtverdampfern, Rührkesselkaskaden, Extrudern, Knetem und Scheibenreaktoren durchgeführt werden.

Im Falle des Phasengrenzflächenverfahrens als Eingangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)diisopropylbenzole gehören.

Besonders bevorzugte Bisphenole, die zu den vorgenannten Verbindungsgruppen gehören, sind 2,2-Bis-(4-hydroxyphenyl)-propan (Bisphenol-A), Tetraalkylbisphenol-A, 4,4-(meta-Phenylendiisopropyl)diphenol (Bisphenol M), 1,1-Bis-(4-hydroxyphenyl)-3,3,5-trimethylcyclohexanon sowie gegebenenfalls deren Gemische. Besonders bevorzugte Copolycarbonate sind solche auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen, umgesetzt.

Die ebenfalls geeigneten Polyestercarbonate werden durch Umsetzung der bereits genannten Bisphenole, mindestens einer aromatischen Dicarbonsäure und gegebenenfalls Kohlensäure erhalten. Geeignete aromatische Dicarbonsäuren sind beispielsweise Orthophtalsäure, Terephthalsäure, Isophthalsäure, 3,3'- oder 4,4'-Diphenyldicarbonsäure und Benzophenondicarbonsäuren.

In dem Phasengrenzflächenverfahren verwendete inerte organische Lösungsmittel sind beispielsweise Dichlormethan, die verschiedenen Dichlorethane und Chlorpropanverbindungen, Chlorbenzol und Chlortoluol, vorzugsweise werden Dichlormethan und Gemische aus Dichlormethan und Chlorbenzol eingesetzt.

Die Reaktion kann durch Katalysatoren, wie tertiäre Amine, N-Alkylpiperidine oder Oniumsalze beschleunigt werden. Bevorzugt werden Tributylamin, Triethylamin und N-Ethylpiperidin verwendet. Als Kettenabbruchmittel und Molmassenregler können ein monofunktionelles Phenol, wie Phenol, Cumylphenol, p.-tert.-Butylphenol oder 4-(1,1,3,3-Tetramethylbutyl)phenol verwendet werden. Als Verzweiger kann beispielsweise Isatinbiscresol eingesetzt werden.

Zur Herstellung der für das erfindungsgemäße Verfahren bevorzugt einsetzbaren hochreinen Polycarbonate werden im Falle des Phasengrenzflächenverfahren die Bisphenole in wässriger alkalischer Phase, vorzugsweise Natronlauge, gelöst. Die gegebenenfalls zur Herstellung von Copolycarbonaten erforderlichen Kettenabbrecher werden in Mengen von 1,0 bis 20,0 Mol-% je Mol Bisphenol, in der wässrigen alkalischen Phase gelöst oder zu dieser in einer inerten organischen Phase in Substanz zugegeben. Anschließend wird Phosgen in den die übrigen Reaktionsbestandteile enthaltenden Mischer eingeleitet und die Polymerisation durchgeführt.

Gegebenenfalls einzusetzende Kettenabbrecher sind sowohl Monophenole als auch Monocarbonsäuren. Geeignete Monophenole sind Phenol selbst, Alkylphenole wie Kresole, p-tert.-Butylphenol, p-Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol sowie deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I) 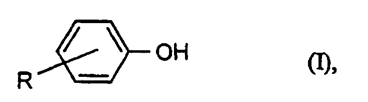 worin R Wasserstoff, tert.-Butyl oder ein verzweigter oder unverzweigter C₈- und/oder C₉-Alkylrest ist.

Bevorzugter Kettenabbrecher ist Phenol und p-tert.-Butylphenol.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Sollte es gewünscht sein, kann der Reaktion noch Verzweiger zugesetzt werden. Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden.

Ein Teil, bis zu 80 Mol-%, vorzugsweise von 20 bis 50 Mol-% der Carbonat-Gruppen in den Polycarbonaten können durch aromatische Dicarbonsäureester-Gruppen ersetzt sein.

Für den Einsatz im erfindungsgemäßen Verfahren besonders bevorzugt geeignete thermoplastische Polycarbonate haben ein mittleres Molekulargewicht M_{w} (ermittelt durch Messung der relativen Viskosität bei 25°C in Dichlormethan und einer Konzentration von 0,5 g Polycarbonat/100 ml Dichlormethan) von 12.000 bis 400.000, vorzugsweise von 12.000 bis 80.000 und insbesondere von 15.000 bis 40.000.

Während der Phasengrenzflächenreaktion wird die wässrige Phase in der organischen Phase emulgiert. Dabei entstehen Tröpfchen unterschiedlicher Größe. Nach der Reaktion wird die organische, das Polycarbonat enthaltende Phase, üblicherweise mehrmals mit einer wässrigen Flüssigkeit gewaschen und nach jedem Waschvorgang von der wässrigen Phase soweit wie möglich getrennt. Die Polymerlösung ist nach der Wäsche und Abtrennung der Waschflüssigkeit trüb. Als Waschflüssigkeit werden wässrige Flüssigkeit zur Abtrennung des Katalysators, eine verdünnte Mineralsäure wie HCl oder H₃PO₄ und zur weiteren Reinigung vollentsalztes Wasser eingesetzt. Die Konzentration von HCl oder H₃PO₄ in der Waschflüssigkeit kann beispielsweise 0,5 bis 1,0 Gew.% betragen. Die organische Phase kann beispielsweise fünfmal gewaschen werden.

Als Phasentrennvorrichtungen zur Abtrennung der Waschflüssigkeit von der organischen Phase können grundsätzlich bekannte Trenngefäße, Phasenseparatoren, Zentrifugen oder Coalescer oder auch Kombinationen dieser Einrichtungen verwendet werden.

Zum Erhalt des hochreinen Polycarbonats wird das Lösungsmittel abgedampft. Das Abdampfen kann in mehreren Verdampferstufen erfolgen. Gemäß einer weiteren bevorzugten Ausführungsform kann das Lösungsmittel oder ein Teil des Lösungsmittels durch Sprühtrocknung entfernt werden. Das hochreine Polycarbonat fällt dann als Pulver an. Gleiches gilt für die Gewinnung des besonders bevorzugt geeigneten hochreinen Polycarbonats durch Fällung aus der organischen Lösung und anschließender Resttrocknung. Eine andere bevorzugte Ausführungsform ist die Extrusion zur Verdampfung von Restlösungsmittel. Eine andere Variante der Aufarbeitung stellt die Strangverdampfertechnologie dar.

Nach den unterschiedlich möglichen Entfernungsmethoden des Lösungsmittels bzw. im Falle des Schmelzepolycarbonatverfahrens Restmonomerentfernung/Reaktion wird das Polycarbonat in dem erfindungsgemäßen Granulierverfahren eingesetzt.

Die besonders bevorzugte Form der Granulierung ist beispielsweise derart aufgebaut, dass aus einer wechselbaren Düse mit integriertem Sieb in 1 bis 5 Reihen, vorzugsweise in 1 bis 3 Reihen, die parallel oder zu einander versetzt sein können, senkrecht nach unten austretende heiße Polymerstränge von einem durch ein Wasserbad laufenden Bandpaar automatisch erfasst, gekühlt und auf den gewünschten Durchmesser verstreckt werden.

Das Bandpaar schiebt die Polymerstränge über eine Trockenstrecke, in der das anhaftende Oberflächenwasser durch Saugschlitze und Blasdüsen weitgehend entfernt wird.

Die von der Trockenstrecke kommenden Polymerstränge werden im Granulator von einem Einzugswalzenpaar erfasst, vorgeschoben und von einem rotierenden Schermesser, das mit geringem Spiel an einem Standmesser oder Ambossmesser vorbeidreht, zu Granulat geschnitten.

Anschließend fällt das geschnittene Granulat über eine Rutsche auf ein Klassiersieb oder in eine Zentrifuge, um den evtl. anfallenden Überkornanteil abzutrennen. Das Klassiersieb bzw. die Zentrifuge werden abgesaugt, um den entstehenden Wasserdampf, gebildet durch an Granulatkörnern anhaftendes verdampfendes Wasser aus der Granulieranlage, abzuziehen.

Die Granulierungsvorrichtung steht in einem geschlossenen Produktionsraum, der insbesondere unter Überdruck gegenüber der Umgebung gehalten wird. Das erfolgt dergestalt, dass Außenluft der Umgebung durch einen Ventilator über einen Vor- und Nacherhitzer zur Trocknung der Luft angesaugt und anschließend über ein Vor- und Feinfiltersystem gedrückt wird. Von dort gelangt die getrocknete und gefilterte Luft über Kanäle in den Ort der Granulierung. Der Lufteintritt erfolgt wiederum bevorzugt über mehrere Lufteinlässe.

Das Vor- und Feinfiltersystem filtriert insbesondere dergestalt, dass die Luft bevorzugt zunächst über Vorfilter der Filterklasse EU 5 bis EU7, danach über Feinfilter der Filterklasse EU 7 bis EU 9 und schließlich über Endfilter der Filterklasse EU 13 bis EU 14 gefiltert wird (nach DIN 24183 bzw. EUROVENT 4/5, 4/4).

Bevorzugt findet im Granulierverfahren ein ca. 5 bis 100 facher Luftwechsel pro Stunde, bevorzugt ein 10 bis 70 facher Luftwechsel pro Stunde am Ort der Granulierung statt.

Die mit dem Polymeren in Kontakt tretende Kühlluft bzw. Umgebungsluft durchströmt in einer besonderen Ausführung der Erfindung den Raum insbesondere im Produktionsbereich laminar, bevorzugt von oben nach unten.

Das Innere des Raumes weist insbesondere einen leichten Überdruck von 1 bis 30 Pa gegenüber der Umgebung des Raumes auf.

Formkörper aus dem erfindungsgemäß produzierten hochreinen Polycarbonat sind insbesondere optische und magnetooptische Datenspeicher wie Mini Disk, Compact Disk oder Digital Versatile Disk, optische Linsen und Prismen, Verscheibungen für Kraftfahrzeuge und Scheinwerfer, Verscheibungen anderer Art wie für Gewächshäuser, sogenannte Stegdoppelplatten oder Hohlkammerplatten oder Massivplatten. Hergestellt werden diese Formkörper durch Spritzgussverfahren, Extrusionsverfahren und Extrusions-Blasformverfahren unter Verwendung des erfindungsgemäß produzierten Polycarbonats mit dem geeigneten Molekulargewicht.

Der bevorzugte Molekulargewichtsbereich für die Datenträger beträgt 12.000 bis 22.000, für Linsen und Verscheibungen 22.000 bis 32.000 und derjenige von Platten und Hohlkammerplatten 28.000 bis 40.000. Alle Molekulargewichtsangaben beziehen sich auf das Gewichtsmittel der Molmasse.

Den Polycarbonaten können noch die üblichen Additive wie UV-Stabilisatoren, Antioxidantien und Entformungsmittel, in den für thermoplastischen Polycarbonaten üblichen Mengen zugeführt werden.

Die Formkörper weisen gegebenenfalls eine Oberflächenvergütung auf, beispielsweise eine Kratzfestbeschichtung.

Zur Herstellung von optischen Linsen und Folien oder Scheiben für magnetooptische Datenträger werden die Polycarbonate vorzugsweise mit einem Molekulargewicht von 12.000 bis 40.000 eingesetzt, da sich ein Material mit einer Molmasse in diesem Bereich sehr gut thermoplastisch formen lässt. Die Formkörper können durch Spritzgussverfahren hergestellt werden. Dazu wird das Harz auf Temperaturen von 300 bis 400°C geschmolzen und die Form im allgemeinen auf einer Temperatur von 50 bis 140°C gehalten.

Zur Herstellung beispielsweise eines plattenförmigen Datenspeichermaterials wird der hochreine Polycarbonatkörper in dafür geeigneten, bekannten Kunststoffspritzgießmaschinen hergestellt.

Das folgende Beispiel dient der Erläuterung der Erfindung.

### Beispiele

### Beispiel 1

Zur Herstellung der Polycarbonate wird BPA (BPA wird als Schmelze kontinuierlich mit einer wässrigen 6,5 %igen NaOH zusammengebracht) in einer wässrigen 6,5 %igen NaOH unter Sauerstoffausschluss gemischt. Die eingesetzte NaOH und das VE-Wasser wird mit 0,6 µa (NaOH) bzw. 0,1 µa Filter (VE-Wasser) der Fa. Pall filtriert. Diese Natriumdibisphenolatlösung wird nun in die Polycarbonatreaktion mit Phosgen und t-Butylphenol als Kettenabbrecher eingesetzt. Nach der Reaktion wird die Reaktionslösung über einen 1,0 µnom Beutelfilter filtriert und der Wäsche zugeführt. Hier wird mit 0,6 %iger Salzsäure gewaschen und anschließend mit filtriertem VE-Wasser noch 5 mal nachgewaschen. Die organische Lösung wird von der wässrigen abgetrennt und nach dem Erwärmen der organischen Lösung auf 55°C zuerst mit 0,6 µa Filter und anschließend über ein 0,2 µa Filter filtriert. Jetzt wird das Polymer durch Abdampfen vom Lösungsmittel befreit, und es werden der Polycarbonatschmelze 500 ppm Glycerinmonostearat (Entformungsmittel) zugeführt, das zuvor über einen 0,2 µa Filter filtriert wurde. Anschließend wird das Polycarbonat, welches ein M_{w} von 19 500 aufweist dem Granulierungsprozess zugeführt.

Die Granulierung des Polycarbonats wird unter folgenden Bedingungen durchgeführt: die Umgebungsluft wird stufenweise filtriert und zwar dergestalt, dass die Luft zunächst über Vorfilter der Filterklasse EU 6, danach über Feinfilter der Filterklasse EU 8 und schließlich über Endfilter der Filterklasse EU 13 filtriert wird (nach DIN 24 183 bzw. EUROVENT 4/5, 4(4).

Hierbei wird außerdem ein ca. 60facher Luftwechsel/h, am Ort der Granulierung sichergestellt; die Luft strömt dabei laminar von oben nach unten. Am Ort der Granulierung herrscht ein leichter Überdruckbereich von 10 Pa (gegenüber der Umgebung des Raumes). Das bei der Granulierung eingesetzte Kühlwasser wird durch ein 0,1 µa Filter der Fa. Pall filtriert und weist nach der Filtration 475 000 Mio. Partikel/l Wasser >0,5 µ auf.

Aus dem Polycarbonat wird nun eine Folie extrudiert und diese mit dem u.g. Folien-Laser-Scan-Test auf Störstellen ausgetestet.

Die Extrusionsfolie ist 200 µm dick und 60 mm breit. Ein He-Ne-Laser ("Spotdiameter" von 0,1 mm) tastet die Folie, mit einer Scanfrequenz von 5000 Hz in der Breiterichtung und eine Transportgeschwindigkeit von 5 m/s in der Längsrichtung, ab. Dabei werden alle Störstellen, die eine Streuung des durchgehenden Laserstrahls (ab 0,10 mm Durchmesser) bewirken, durch einen Photomultipler detektiert und softwaremäßig gezählt. Die Anzahl optische Störstellen pro kg Polycarbonat bzw. pro m² Folie, ist ein Maß für die Oberflächenqualität dieser Folie bzw. Reinheit des PC.

Die Ergebnisse des Tests sind mit den beiden Vergleichsversuchen in Tabelle 1 zusammengefasst. Hieraus ergibt sich die Überlegenheit des erfindungsgemäßen Verfahrens im Vergleich zur Granulation ohne Luftfilterung.

### Beispiel 2

Es wird wie unter Beispiel 1 beschrieben verfahren, jedoch wird auf die Filterung des Kühlwassers bei der Granulierung verzichtet. Das Ergebnis eines Laser-Scan-Test ist in Tabelle 1 wiedergegeben.

### Vergleichsbeispiel 1

Es wird verfahren wie in Beispiel 1, nur wird auf die Filtration der Umgebungsluft verzichtet. Man erhält dann die in Tabelle 1 beschriebenen Testergebnisse.

### Vergleichsbeispiel 2

Es wird verfahren wie in Beispiel 1, nur wird auf die Filtration der Umgebungsluft und die Filtration des Kühlwassers verzichtet.

Man erhält dann die in Tabelle 1 beschriebenen Testergebnisse.

**Tabelle 1**

| Auswertung Extrusionsfolie mit Folien-Laser-Scan-Test | | | | |
|---|---|---|---|---|
| | Polycarbonate aus: | | | |
| | Beispiel 1 | Beispiel 2 | Vergleichsbeispiel 1 | Vergleichsbeispiel 2 |
| Störstellen pro m² Oberfläche | | | | |
| 0,10-0,30 mm | 25 | 40 | 130 | 139 |
| >0,30 mm | 32 | 45 | 148 | 163 |
| Summe | 57 | 85 | 278 | 302 |

## Patentansprüche

1. Verfahren zur Herstellung von Polymergranulat, insbesondere Polycarbonatgranulat, aus Polymerschmelzen, insbesondere Polycarbonatschmelzen durch Schmelzeextrusion des Polymeren, Abkühlen der Schmelze in einer Kühlflüssigkeit und Granulieren des verfestigten Polymeren, **dadurch gekennzeichnet, dass** die mit dem Polymeren in Kontakt tretende Kühlluft bzw. Umgebungsluft einen Anteil an Feststoffpartikeln von maximal 10 ppm, bevorzugt maximal 5 ppm, besonders bevorzugt maximal 0,5 ppm aufweist.

2. Verfahren gemäß Anspruch 1, **dadurch gekennzeichnet, dass** die Schmelzeextrusion, das Abkühlen der Schmelze und Granulieren des Polymeren in einem gekapselten Raum durchgeführt wird

3. Verfahren gemäß Anspruch 1 oder 2, **dadurch gekennzeichnet, dass** die Granulierung in einem Raum durchgeführt wird, wobei die mit dem Polymermaterial in Kontakt tretende Umgebungsluft stufenweise filtriert wird und zwar dergestalt, dass die Luft bevorzugt zunächst über Vorfilter der Filterklasse EU 5 bis EU 7, danach über Feinfilter der Filterklasse EU 7 bis EU 9 und schließlich über Endfilter der Filterklasse EU 13 bis EU 14 gefiltert wird, wobei die Filterklassen nach DIN 24183 bzw. EUROVENT 4/5, 4/4 im Stand August 1999 bestimmt sind

4. Verfahren gemäß einem der Ansprüche 1 bis 3, **dadurch gekennzeichnet, dass** ein ca. 5 bis 100 facher Luftwechsel pro Stunde, bevorzugt ein 10 bis 70 facher Luftwechsel pro Stunde am Ort der Granulierung stattfindet.

5. Verfahren gemäß einem der Ansprüche 1 bis 4, **dadurch gekennzeichnet, dass** die mit dem Polymeren in Kontakt tretende Kühlluft bzw. Umgebungsluft den Raum insbesondere im Produktionsbereich laminar, bevorzugt von oben nach unten durchströmt.

6. Verfahren gemäß einem der Ansprüche 1 bis 5, **dadurch gekennzeichnet, dass** das Innere des Raumes einen leichten Überdruck von 1 bis 30 Pa gegenüber der Umgebung des Raumes aufweist.

7. Verfahren gemäß einem der Ansprüche 1 bis 6, **dadurch gekennzeichnet, dass** als Polymere transparente Polycarbonate, insbesondere Homopolycarbonate Copolycarbonate oder deren Gemische, besonders bevorzugt aromatische Polyestercarbonate oder Polycarbonate, die im Gemisch mit aromatischen Polyestercarbonaten vorliegen, verwendet werden.

8. Verfahren gemäß einem der Ansprüche 1 bis 7, **dadurch gekennzeichnet, dass** jede mit dem Polymer in Kontakt tretende Kühlflüssigkeit einen Anteil von Fremdpartikeln von höchstens 2 Mio. Teilchen mit einer Teilchengröße >0,5 µm pro I Wasser bevorzugt höchstens 1 Mio. Teilchen mit einer Teilchengröße >0,5 µm pro I Wasser besonders bevorzugt höchstens 0,5 Mio. Teilchen mit einer Teilchengröße >0,5 µm pro I Wasser hat.

9. Verfahren gemäß einem der Ansprüche 1 bis 8, **dadurch gekennzeichnet, dass** alle Einsatzstoffe, das Polymer, bevorzugt gelöst im Lösungsmittel einschließlich der Polymeradditive, und die Kühlflüssigkeit vor dem Einsatz gegebenenfalls in mehreren Stufen feingefiltert werden.

10. Verfahren gemäß Anspruch 9, **dadurch gekennzeichnet, dass** die Porengröße der Filtermaterialien von 0,01 bis 5 µm, vorzugsweise von 0,02 bis 1,5 µm, bevorzugt von etwa 0,05 µm bis 1,0 µm beträgt.

## Claims

1. A process for producing polymer pellets, in particular polycarbonate pellets, from polymer melts, in particular polycarbonate melts, by melt extruding the polymer, cooling the melt in a cooling fluid and pelletising the solidified polymer, **characterised in that** the cooling air or ambient air coming into contact with the polymer has a solids particle content of at most 10 ppm, preferably at most 5 ppm, particularly preferably at most 0.5 ppm.

2. A process according to claim 1, **characterised in that** the melt extrusion, cooling of the melt and pelletisation of the polymer are performed in an enclosed room.

3. A process according to claim 1 or claim 2, **characterised in that** pelletisation is performed in a room, wherein the ambient air coming into contact with the polymer material is filtered in stages, the air being preferably initially filtered through primary filters of filter classes EU 5 to EU 7, then filtered through fine filters of filter classes EU 7 to EU 9 and finally through final filters of filter classes EU 13 to EU 14, wherein the filter classes are determined to DIN 24183 or EUROVENT 4/5, 4/4 as at August 1999.

4. A process according to one of claims 1 to 3, **characterised in that** the air is preferably exchanged approximately 5 to 100 times per hour, preferably 10 to 70 times per hour, at the pelletising station.

5. A process according to one of claims 1 to 4, **characterised in that** the cooling air or ambient air coming into contact with the polymer flows through the room, in particular in the production area, in laminar manner, preferably from top to bottom.

6. A process according to one of claims 1 to 5, **characterised in that** the inside of the room comprises a slight excess pressure of 1 to 30 Pa relative to the ambient pressure.

7. A process according to one of claims 1 to 6, **characterised in that** the polymers used are transparent polycarbonates, in particular homopolycarbonates, copolycarbonates or mixtures thereof, particularly preferably aromatic polyester carbonates or polycarbonates which are present in a mixture with aromatic polyester carbonates.

8. A process according to one of claims 1 to 7, **characterised in that** any cooling fluid which comes into contact with the polymer exhibits a foreign particle content of at most 2 million particles having a particle size > 0.5 µm per l of water, preferably at most 1 million particles having a particle size > 0.5 µm per l of water, particularly preferably at most 0.5 million particles having a particle size > 0.5 µm per l of water.

9. A process according to one of claims 1 to 8, **characterised in that** all the feed materials, the polymer, preferably dissolved in the solvent including the polymer additives, and the cooling fluid are fine-filtered prior to use, optionally in a plurality of stages.

10. A process according to claim 9, **characterised in that** the pore size of the filter materials amounts to from 0.01 to 5 µm, preferably from 0.02 to 1.5 µm, preferably from approximately 0.05 µm to 1.0 µm.

## Revendications

1. Procédé de production de granulés polymères, en particulier de granulés de polycarbonate à partir de masses fondues polymères, en particulier de masses fondues de polycarbonate, par extrusion de la masse fondue du polymère, refroidissement de la masse fondue dans un liquide de refroidissement et granulation du polymère solidifié, **caractérisé en ce que** l'air de refroidissement ou l'air ambiant entrant en contact avec le polymère présente une proportion de particules de matières solides de 10 ppm maximum, de préférence de 5 ppm maximum, en particulier de 0,5 ppm maximum.

2. Procédé selon la revendication 1, **caractérisé en ce que** l'extrusion de la masse fondue, le refroidissement de la masse fondue et la granulation du polymère sont effectués dans un local parfaitement étanche.

3. Procédé selon l'une des revendications 1 ou 2, **caractérisé en ce que** la granulation est effectuée dans un local dans lequel l'air ambiant entrant en contact avec le matériau polymère est filtré progressivement et conçu de telle sorte que l'air soit de préférence filtré d'abord par l'intermédiaire d'un préfiltre de la classe de filtre EU 5 à EU 7, puis par l'intermédiaire du filtre fin de la classe de filtre EU 7 à EU 9 et enfin par l'intermédiaire du filtre final de la classe EU 13 à EU 14, les classes de filtre étant déterminées selon DIN 24183 ou EUROVENT 4/5, 4/4 dans la version d'août 1999.

4. Procédé selon l'une des revendications 1 à 3, **caractérisé en ce qu'**un renouvellement de l'air 5 à 100 fois par heure, de préférence 10 à 70 fois par heure intervient à l'endroit de la granulation.

5. Procédé selon l'une des revendications 1 à 4, **caractérisé en ce que** l'air de refroidissement ou l'air ambiant entrant en contact avec le polymère traverse le local de manière laminaire, de préférence de haut en bas, en particulier dans la zone de production.

6. Procédé selon l'une des revendications 1 à 5, **caractérisé en ce que** l'intérieur du local présente une légère surpression de 1 à 30 Pa par rapport aux environs du local.

7. Procédé selon l'une des revendications 1 à 6, **caractérisé en ce que** des polycarbonates transparents, en particulier des homopolycarbonates, des copolycarbonates ou leurs mélanges, tout particulièrement les polyestercarbonates aromatiques ou les polycarbonates qui sont présents en mélange avec des polyestercarbonates aromatiques sont utilisés.

8. Procédé selon l'une des revendications 1 à 7, **caractérisé en ce que** tout liquide de refroidissement entrant en contact avec le polymère contient une proportion de particules étrangères de 2 millions de particules par I d'eau pour une taille des particules > 0,5 µml au maximum, de préférence au maximum 1 million de particules par I d'eau pour une taille des particules > 0,5 µm, tout particulièrement au maximum 0,5 million de particules par I d'eau pour une taille des particules > 0,5 µm.

9. Procédé selon l'une des revendications 1 à 8, **caractérisé en ce que** toutes les substances utilisées, le polymère, de préférence dissous dans le solvant, y compris les additifs de polymère et le liquide de refroidissement sont éventuellement filtrés finement en plusieurs étapes avant l'utilisation.

10. Procédé selon la revendication 9, **caractérisé en ce que** le diamètre des pores des matériaux de filtrage s'élève à 0,01 à 5 µm, de préférence 0,02 à 1,5 µm, tout particulièrement 0,05 à 1,0 µm environ.
